# EUROPEAN PATENT SPECIFICATION

(11) **EP 2 823 927 B1**
(45) Date of publication and mention of the grant of the patent: **21.08.2019**
(21) Application number: 13757053.7
(22) Date of filing: 07.03.2013
(51) Int. Cl.: B23K 9/18, B23K 9/12, B23K 9/26, B23K 35/02, B23K 9/28

(54) **WELDING TORCH FOR FIRST ELECTRODE FOR MULTI-ELECTRODE SUBMERGED ARC WELDING AND WELDING METHOD USING SAME**
SCHWEISSBRENNER FÜR ERSTE ELEKTRODE FÜR UNTERPULVERSCHWEISSEN MIT MEHREREN ELEKTRODEN UND SCHWEISSVERFAHREN DAMIT
TORCHE DE SOUDAGE POUR PREMIÈRE ÉLECTRODE POUR SOUDAGE À L'ARC SUBMERGÉ MULTI-ÉLECTRODES ET PROCÉDÉ DE SOUDAGE UTILISANT CELLE-CI

(30) Priority: 08.03.2012 JP 2012051090
(43) Date of publication of application: 14.01.2015
(73) Proprietor: JFE Steel Corporation, Tokyo 100-0011 (JP)
(72) Inventor: YOKOTA, Tomoyuki, Tokyo 100-0011 (JP); HAYAKAWA, Naoya, Tokyo 100-0011 (JP); KAWAI, Keiji, Tokyo 100-0011 (JP); YANO, Koji, Tokyo 100-0011 (JP)
(74) Representative: Haseltine Lake Kempner LLP
(86) International application number: PCT/JP2013/001428
(87) International publication number: WO 2013/132855

(56) References cited:
- EP-A1- 2 067 566
- AU-B2- 2002 336 817
- DE-U1-202011 051 668
- JP-A- H 091 346
- JP-A- H0 740 052
- JP-A- S5 847 573
- JP-A- H08 155 649
- JP-A- H08 257 754
- JP-A- 2007 260 692
- JP-A- 2007 260 692
- JP-U- S57 116 381
- US-A- 2 761 049
- US-A1- 2010 314 374

## Description

### Technical Field

The present invention relates to welding torches, for use with leading electrodes in the multiple-electrode submerged arc welding of steel plates, suitable for applications such as the seam welding of large-diameter steel pipes, and also relates to multiple-electrode submerged arc welding methods using such welding torches.

### Background Art

Submerged arc welding has several advantages such as excellent weld quality, good bead appearance, and, among others, large heat input because slag shields a molten pool. For welding of steel plates along a long straight weld line, submerged arc welding using two or more electrodes, i.e., multiple-electrode submerged arc welding, is generally applied to perform a high-quality, high-efficiency welding procedure.

For more efficient welding of steel plates, it is necessary to increase the penetration depth, which is defined as the distance from the surface of a steel plate to the bottom end of molten metal, as well as the deposition rate. Submerged arc welding, in which a larger welding current can be applied than in gas-shielded arc welding, allows deep penetration and is therefore suitable for more efficient welding of steel plates. Because of the advantage of large heat input with large current, however, placing emphasis on higher welding efficiency and fewer flaws (e.g., fewer slag inclusions) would result in excess welding heat input, which is disadvantageous in that it would decrease the weld toughness, particularly the heat-affected zone (HAZ) toughness.

A reduction in heat input inevitably decreases the amount of deposit metal. Accordingly, the cross-sectional area of the groove needs to be reduced depending on the decrease in the amount of deposit metal. This would result in a lack of penetration unless welding is performed with deeper penetration. Thus, to solve the foregoing problem, it is necessary to tackle the challenge of achieving both reduced heat input and increased penetration depth.

To address the foregoing challenge, for example, Patent Literature 1 proposes a low-heat-input multiple-electrode submerged arc welding method using at least one leading electrode having a smaller wire diameter than a trailing electrode and a direct-current power source for at least one leading electrode. This increases the wire current density and therefore increases the amount of joule heat and the amount of deposit metal. Thus, this method allows the welding heat input to be effectively reduced while providing the same penetration depth as in the related art. Unfortunately, the increased amount of deposit metal does not allow for a sufficient reduction in welding heat input. In addition, the process of manufacturing thin wires, including wire drawing and intermediate annealing, involves higher costs as welding materials of higher strength grades are used.

Patent Literature 2 discloses a submerged arc welding method using a flux-cored wire having a diameter of 3.2 mm or less as a leading electrode. A flux-cored wire contains a filling powder and thus has a smaller cross-sectional metal area than a solid wire of the same diameter. This increases the effective current density and therefore increases the wire melting rate and the amount of deposit metal per unit welding heat input, thus allowing a higher deposition rate to be achieved with low welding heat input.

In contrast, the use of a solid wire is not sufficiently effective because it has a larger cross-sectional metal area and thus has a lower current density for the same diameter. In this technique, it is desirable to use a powder containing a metal component in an amount of 80% by mass or more of the weight of the powder to achieve high deposition rate. Another advantage is that a thin flux-cored wire can be manufactured at a lower cost than a thin solid wire, particularly for high strength grades.

As discussed above, the use of a thin flux-cored wire increases the wire melting rate and therefore increases the amount of deposit metal per unit welding heat input, thus allowing a higher deposition rate to be achieved with low welding heat input. A thin flux-cored wire also has the advantage of low manufacturing cost, particularly for high strength grades. A flux-cored wire, however, has a problem in that a larger winding remains after wire straightening than in a solid wire.

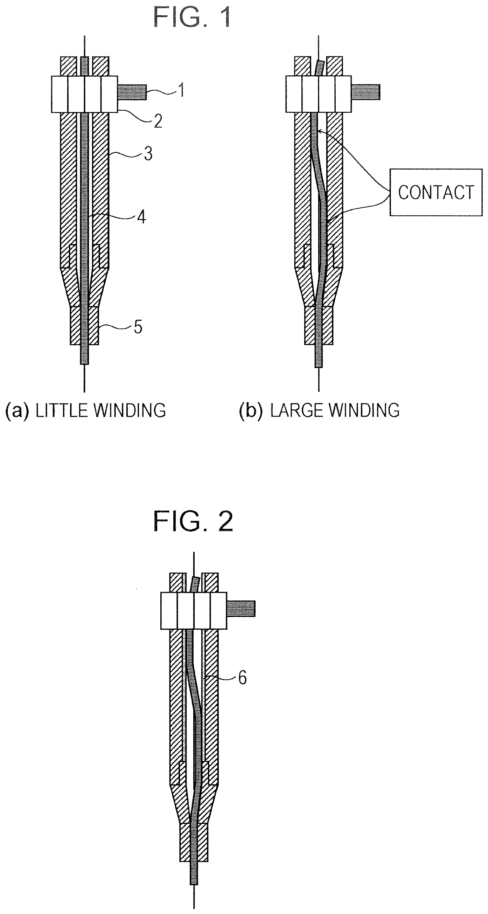

A typical submerged arc welding torch includes a contact tip 5, a connector 2 for a power cable 1, and a tube-shaped conductor (extension nozzle) 3 disposed therebetween. The submerged arc welding torch has a wire insertion hole in the center thereof. A wire 4 is inserted through the insertion hole into contact with the contact tip 5 and is supplied with power from the contact tip 5. However, if large winding remains in the wire 4, as shown in Fig. 1, it comes into contact with the inside of the insertion hole of the conductor on the rear side of the contact tip. As a result, the feeding point varies, and therefore, the wire extension, i.e., the length to the leading end of the wire, varies. In particular, under welding conditions involving high wire feeding speed, such a wire has a problem in that the arc voltage is unstable because the wire feeding speed is even higher during welding.

To avoid such a situation, it is necessary to reinforce wire straightening to ensure sufficient wire straightness so that the wire does not come into physical contact with the inside of the insertion hole, or to electrically insulate the inside of the insertion hole from the wire.

The reinforcement of wire straightening, however, increases the load on the wire feeding motor. In particular, a flux-cored wire may itself be deformed because of its low wire strength. In addition, a spiral or three-dimensional winding remains in a wire drawn from a pail pack. Such a wire is difficult to straighten, particularly if the wire is a flux-cored wire.

Patent Literature 3 and Patent Literature 4 disclose techniques related to welding torches having an insertion hole in which an insulation pipe is disposed. These techniques, however, are intended to insulate the inside of the insertion hole on the front side of the feeding point to increase the wire extension and thereby to increase the amount of joule heat and the deposition rate. Thus, these techniques cannot reduce an unstable increase in wire feeding speed and arc voltage in submerged arc welding, in which a high welding current is applied. Accordingly, weld flaws such as slag inclusions may occur, and the amount of molten wire may vary, which results in an uneven penetration shape.

Patent Literature 5 and Patent Literature 6 disclose techniques for preventing a short circuit in an extension nozzle and thereby achieving stable high-speed welding by setting the feeding point at a position 50 to 100 mm above the leading end of the contact tip and connecting the feeding point to the extension nozzle with an insulator therebetween. These techniques, however, have a problem in that they require a special insulation jig and insulator and involve low work efficiency during the setting of the angles of a plurality of electrodes and the replacement of the contact tip. Because the feeding point is set at a position close to the weld, i.e., 50 to 100 mm above the leading end of the contact tip, the power cable is exposed to large radiant heat, which may cause a problem with the durability of the power cable.

### Citation List

### Patent Literature

PTL 1: Japanese Unexamined Patent Application Publication No. 52-82652
PTL 2: Japanese Unexamined Patent Application Publication No. 2007-260692, upon which the preamble of claim 1 is based.
PTL 3: Japanese Unexamined Patent Application Publication No. 63-80978
PTL 4: Japanese Patent No. 3529043
PTL 5: Japanese Unexamined Patent Application Publication No. 8-155649
PTL 6: Japanese Unexamined Patent Application Publication No. 8-257754

DE202011051668U1 discloses a welding torch with an insulating tube.

### Summary of Invention

### Technical Problem

Accordingly, the present invention provides a welding torch, for use with a leading electrode in multiple-electrode submerged arc welding, that allows stable welding even if a thin wire is used as a leading electrode in multiple-electrode submerged arc welding, particularly if welding is performed under welding conditions involving high wire feeding speed, or even if a flux-cored wire is used in which large winding remains after straightening, and also provides a multiple-electrode submerged arc welding method using such a welding torch.

### Solution to Problem

After conducting extensive research to solve the foregoing problems, the inventors have found that an arc can be effectively stabilized by insulating a tube-shaped conductor disposed between a contact tip and a connector for a power cable from a wire and/or by setting the feeding point at a position 100 to 200 mm above the leading end of the contact tip, thus completing the present invention. Specifically, the present invention is defined in claim 1, and optionally comprising the features of claim 2.

### Advantageous Effects of Invention

The present invention, configured as described above, provides the following advantageous effect:
a) The welding torch according to the present invention allows stable welding even if a thin wire is used as a leading electrode in multiple-electrode submerged arc welding, particularly if welding is performed under welding conditions involving high wire feeding speed, or even if a flux-cored wire is used in which large winding remains after straightening. As a result, a high-quality weld metal can be provided.
   The present invention, which establishes a low-heat-input welding technology using a thin wire in multiple-electrode submerged arc welding, also provides the following advantageous effects:
b) The welding torch according to the present invention allows the welding heat input to be significantly reduced while maintaining a proper penetration depth. As a result, a weld metal and HAZ with excellent low-temperature toughness can be provided.
c) The welding torch according to the present invention does not cause HAZ softening, which is problematic for high-strength steel pipes, thus providing stable weld joint strength.
d) The use of a flux-cored wire significantly reduces weld flaws, such as slag inclusions, which tend to occur when a thin wire is used as a leading electrode to perform welding with a large penetration depth relative to the bead width. As a result, a high-quality weld metal can be provided.

### Brief Description of Drawings

Fig. 1 compares the case (a) where there is little winding in a wire with the case (b) where there is large winding in a wire.
Fig. 2 is a conceptual diagram of means for insulating the inside of an insertion hole from an electrode wire.
Fig. 3 is a graph showing the relationship between welding current and deposition rate with varying wire diameters under the same welding conditions. Description of Embodiments

The present invention will now be specifically described. As discussed above, a welding torch for use in multiple-electrode submerged arc welding includes a contact tip, a connector for a power cable, and a tube-shaped conductor (also referred to as "extension nozzle") disposed therebetween. The welding torch has a wire insertion hole in the center thereof. An electrode wire (or simply referred to as "wire") is inserted through the insertion hole into contact with the contact tip and is supplied with power from the contact tip.

The method for insulating the inside of the insertion hole from the wire according to the present invention is advantageous in that it can reliably prevent power feeding from a position other than the leading end of the contact tip without applying physical force to the wire.

Fig. 2 shows a conceptual diagram of the method for insulating the inside of the insertion hole from the wire. The inside of the insertion hole may be insulated from the wire using a hollow insulation pipe of any material and size. It is desirable, however, to use a wear and abrasion proof insulation pipe 6 because it is constantly rubbed with the wire. To ensure sufficient wear and abrasion proofness, the insulation pipe preferably has a Vickers hardness HV1 of 8 GPa or more. Specifically, the wear and abrasion proof insulation pipe 6 is a ceramic pipe. More specifically, the wear and abrasion proof insulation pipe 6 may be a mullite, silicon nitride, alumina, or zirconia pipe.

Unlike the use of an insulation pipe, the restriction of the distance between the leading end of the contact tip and the power cable cannot prevent a shunt current when a wire comes into contact with the inside of the insertion hole. Nevertheless, a lower shunt current will flow than if there is a long distance between the leading end of the contact tip and the power cable because of fewer shunt points or higher resistance due to a longer shunt path (detour). This probably contributes to less arc voltage instability due to varying feeding points. The distance between the leading end of the contact tip and the connector for the power cable may be 100 mm or more because, if the distance is less than 100 mm, the power cable would be exposed to large radiant heat from the weld, which may cause a problem with the durability of the power cable. The distance between the leading end of the contact tip and the connector for the power cable is preferably 200 mm or less because, if the distance is more than 200 mm, the arc voltage may become unstable when a wire comes into contact with the inside of the insertion hole.

The welding torch according to the present invention, having the above advantageous effects, allows stable welding even if a thin wire is used as a leading electrode in multiple-electrode submerged arc welding, particularly if welding is performed at high wire feeding speed, or even if a flux-cored wire is used in which large winding remains after straightening. As a result, a high-quality weld metal can be provided. As discussed above, a flux-cored wire contains a filling powder and thus has a smaller cross-sectional metal area than a solid wire of the same diameter. This increases the effective current density and therefore increases the wire melting rate and the amount of deposit metal per unit welding heat input, thus allowing a higher deposition rate to be achieved with low welding heat input.

The leading electrode wire has a diameter of 3.2 mm or less. As used herein, the term "leading electrode" refers to an electrode located forward of the other electrodes in the welding direction. The leading electrode wire has a diameter of 3.2 mm or less because the use of a wire having a diameter of more than 3.2 mm would not sufficiently increase the current density and would therefore not sufficiently increase the penetration depth and the deposition rate. The lower limit of the diameter of the leading electrode wire is preferably 1.6 mm. The use of a wire having a diameter of less than 1.6 mm would result in excessive wire feeding speed, which makes it difficult to perform stable control. In addition, such a wire would generate excess joule heat and thus melt excessively, which may result in varying arc lengths and unstable welding conditions.

The flux-cored wire may contain any powder component. To achieve high deposition rate, however, the powder preferably contains a metal component in an amount of 90% by mass or more of the weight of the powder. If the powder contains a metal oxide component, it is preferably present in an amount of 2% to 10% by mass.

In the present invention, the electrodes other than the leading electrode may be of any type, including solid wires. The use of flux-cored wires for the other electrodes does not interfere with the advantageous effects of the present invention. The other electrodes may have any wire diameter. For example, the other electrodes may be wires having a diameter of 4.0 to 6.4 mm, which are used in the related art.

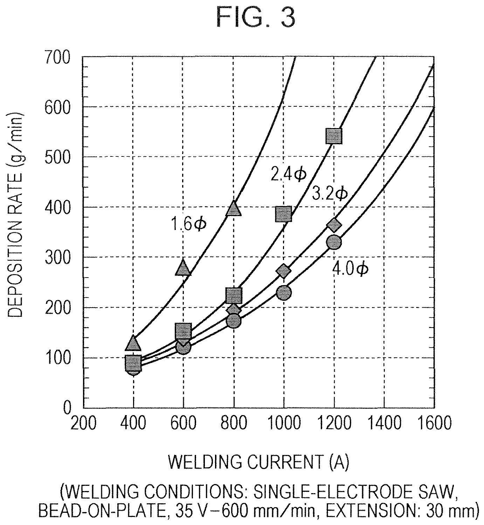

Next, Fig. 3 shows experimental results of the relationship between welding current and deposition rate with varying wire diameters under the same welding conditions. As shown in the graph, the amount of deposit metal increases with decreasing wire diameter for the same welding current. This tendency is noticeable at welding currents of 800 A or more. Thus, welding at a welding current of 800 A or more using a thin wire having a diameter of 3.2 mm or less allows deep penetration with low welding heat input even if the cross-section area of the groove is reduced, and therefore, the total amount of deposit metal is reduced. Preferably, the welding current is 1,000 A or more. The upper limit of the welding current is preferably 1,400 A because an excessive welding current would increase the welding heat input and thus adversely affect the HAZ toughness.

### EXAMPLES

A bead-on-plate test was performed on a pipe made of a composition corresponding to API (American Petroleum Institute) X65 and having an outer diameter of 86.36 cm (34 inches) and a thickness of 31.2 mm by multiple-electrode submerged arc welding over a weld length of 10 m under the welding conditions shown in Table 1. In all examples, the leading electrode was a flux-cored wire having a diameter of 2.4 mm. The powder in the flux-cored wire contained 100% metal component. The weight ratio of the mild steel shell to the filling powder was 3:1. The welding wire for the second electrode was a solid wire containing 0.19% by mass carbon, 0.5% by mass molybdenum, and 0.1% by mass titanium and having a diameter of 4.0 mm. The welding wires for the third and fourth electrodes were solid wires containing 0.05% by mass carbon and 0.2% by mass titanium and having a diameter of 4.0 mm.

### [Table 1]

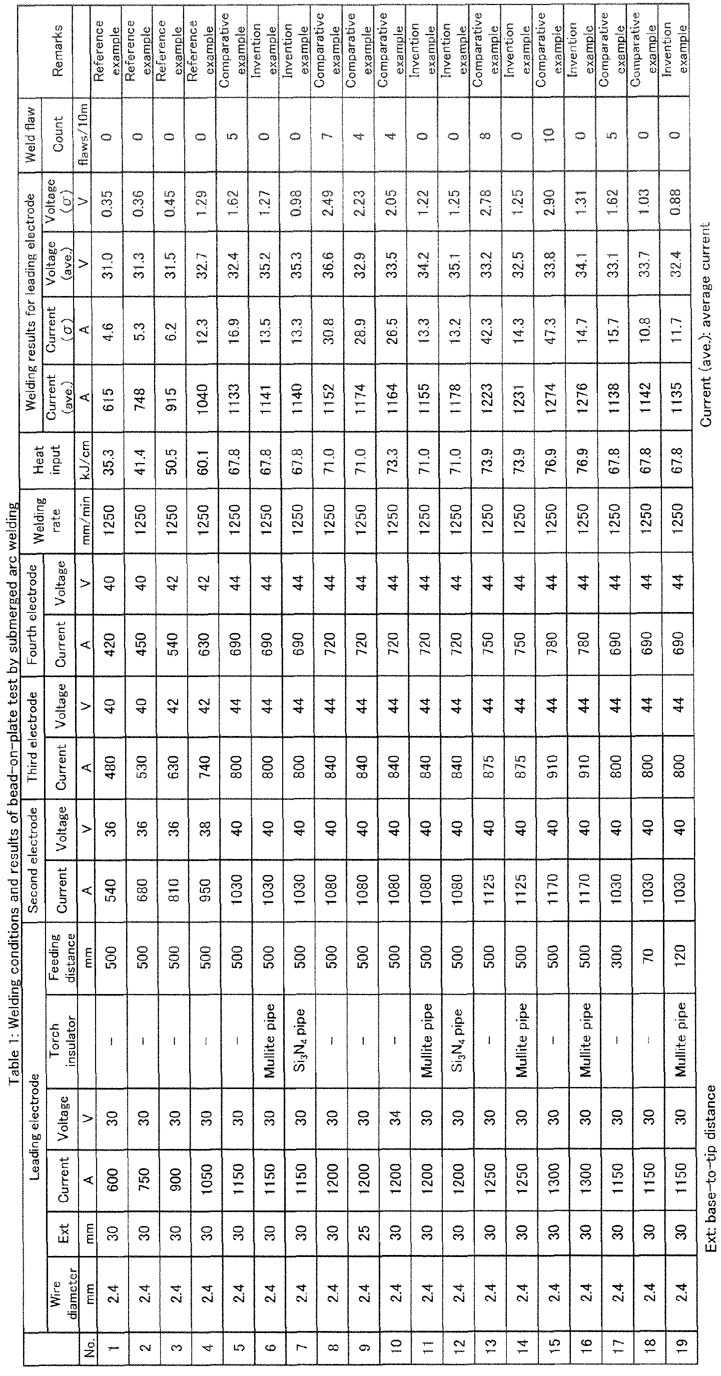

In the examples, the welding results for the thin wire used as the leading electrode were monitored (as instantaneous values) at a sampling pitch of 0.1 second. The target standard deviation σ of the current variation was 15 A or less. The welding voltage was similarly evaluated. The standard deviation of the current variation was determined in order to evaluate the stability of the welding current during welding. A welding current with a standard deviation σ of more than 15 A was determined to be unstable. A voltage with a standard deviation σ of more than 1.5 V was determined to be unstable.

In the table, "torch insulator" indicates the presence or absence of means for insulating the tube-shaped conductor disposed between the contact tip and the connector for the power cable from the electrode wire. "-" indicates the absence of insulating means in that position. "Mullite pipe" and "Si₃N₄ pipe" indicate insulation pipes made of the respective ceramic materials. "Feeding distance" indicates the distance between the leading end of the contact tip and the center of the power cable. To examine the presence or absence of weld flaws, such as slag inclusions, a radiographic examination was performed over the entire welding length, and the number of flaws having diameters of more than 2 mm was counted.

As shown in Table 1, no unstable welding arc was observed for the welding torches including no insulation pipe at a welding current of 1,050 A or less. However, large variation in arc voltage and unstable current were observed at high welding currents, i.e., 1,150 A or more, and therefore at high wire feeding speeds. The results demonstrate that unstable welding current or voltage tends to cause more slag inclusions. In contrast, when the welding torches including an insulation pipe according to the present invention was used for the thin flux-cored wire used as the leading electrode in multiple-electrode submerged arc welding, they had a smaller current variation, i.e., a standard deviation σ of 15 A or less, even at a high current, i.e., 1,300 A, and therefore at a high wire feeding speed. Thus, a high-quality weld metal having no weld flaws was provided. In Example No. 18, stable welding was observed with a short feeding distance, i.e., 70 mm; however, it is outside the scope of the present invention because the power cable would be damaged by welding radiant heat. Reference Signs List

- 1: power cable
- 2: connector for power cable
- 3: intermediate tube-shaped conductor (extension nozzle)
- 4: electrode wire
- 5: contact tip
- 6: insulation pipe

## Claims

1. A multiple-electrode submerged arc welding method comprising performing welding using the welding torch for use with a leading electrode in multiple-electrode submerged arc welding, using a flux-cored wire having a diameter of 3.2 mm or less as a leading electrode wire, **characterised in that** the welding torch comprises a contact tip (5), a connector (2) for a power cable (1), a tube-shaped conductor (3) disposed therebetween, and means (6) for insulating the tube-shaped conductor (3) from an electrode wire (4); wherein
the means (6) for insulating the tube-shaped conductor (3) from the electrode wire (4) is a ceramic pipe and covers the whole of the inner wall of the tube-shaped conductor,
the ceramic pipe has a Vickers hardness HV1 of 8 GPa or more, and
the distance between a leading end of the contact tip (5) and the connector (2) for a power cable (1) is 100 to 200 mm.

2. The multiple-electrode submerged arc welding method according to claim 1, wherein welding is performed by supplying a welding current of 800 A or more to the leading electrode.

## Patentansprüche

1. Mehrelektroden-Unterpulverschweißverfahren, das das Ausführen des Schweißens unter Verwendung des Schweißbrenners zur Verwendung mit einer Führungselektrode beim Mehrelektroden-Unterpulverschweißen umfasst, **dadurch gekennzeichnet, dass** der Schweißbrenner eine Kontaktspitze (5), einen Verbindungsstecker (2) für ein Stromkabel (1), einen rohrförmigen Leiter (3), der dazwischen angeordnet ist, und Mittel (6) zum Isolieren des rohrförmigen Leiters (3) von einem Schweißdraht (4) umfasst;
Verwendung eines flussmittelgefüllten Drahtes, der einen Durchmesser von 3,2 mm oder weniger hat, als führenden Schweißdraht,
wobei
das Mittel (6) zum Isolieren des rohrförmigen Leiters (3) vom Schweißdraht (4) ein Keramikrohr ist und die gesamte Innenwand des rohrförmigen Leiters vollständig bedeckt,
das Keramikrohr hat eine Vickers-Härte HV1 von 8 GPa oder mehr, und
der Abstand zwischen einem führenden Ende der Kontaktspitze (5) und dem Verbindungsstecker (2) für ein Stromkabel (1) beträgt 100 bis 200 mm.

2. Mehrelektroden-Unterpulverschweißverfahren nach Anspruch 1, wobei das Schweißen durch Zufuhr eines Schweißstroms von 800 A oder mehr zur Führungselektrode ausgeführt wird.

## Revendications

1. Procédé de soudage à l'arc submergé à électrodes multiples comprenant la réalisation d'une soudure en utilisant la torche de soudage destinée à être utilisée avec une électrode de tête dans le soudage à l'arc submergé à électrodes multiples, en utilisant un fil fourré d'un diamètre de 3,2 mm ou moins en tant que fil d'électrode de tête, **caractérisé en ce que** la torche de soudage comprend une pointe de contact (5), un connecteur (2) pour un câble d'alimentation (1), un conducteur en forme de tube (3) disposé entre eux, et des moyens (6) pour isoler le conducteur en forme de tube (3) d'un fil d'électrode (4) ;
dans lequel
les moyens (6) pour isoler le conducteur en forme de tube (3) du fil d'électrode (4) sont un tuyau en céramique et recouvrent la totalité de la paroi interne du conducteur en forme de tube,
le tuyau en céramique a une dureté Vickers HV1 de 8 GPa ou plus, et
la distance entre une extrémité de tête de la pointe de contact (5) et le connecteur (2) pour un câble d'alimentation (1) est comprise entre 100 et 200 mm.

2. Procédé de soudage à l'arc submergé à électrodes multiples selon la revendication 1, dans lequel le soudage est effectué en fournissant un courant de soudage de 800 A ou plus à l'électrode de tête.
